# EUROPÄISCHE PATENTSCHRIFT

(11) **EP 0 451 600 B1**
(45) Veröffentlichungstag und Bekanntmachung des Hinweises auf die Patenterteilung: **12.06.1996**
(21) Anmeldenummer: 91104726.4
(22) Anmeldetag: 26.03.1991
(51) Int. Cl.: B01D 1/02

(54) **Kontinuierliches Verfahren zur Aufkonzentrierung von mit Salzen und Harzen beladenen Lösungen**
Continuous process to concentrate solution charged with salts and resins
Procédé continu de concentration de solutions chargées de sels et de résines

(30) Priorität: 07.04.1990 DE 4011380
(43) Veröffentlichungstag der Anmeldung: 16.10.1991
(73) Patentinhaber: BAYER AG, 51368 Leverkusen (DE)
(72) Erfinder: Casper, Clemens, Dr., W-4150 Krefeld (DE); Weinschenck, Jörgen, Dipl.-Ing., W-4150 Krefeld (DE)

(56) Entgegenhaltungen:
- EP-A- 0 011 183
- DE-A- 3 135 787
- GB-A- 1 457 032
- US-A- 3 453 184
- US-A- 3 550 669
- US-A- 3 833 480
- SOVIET PATENT ABSTRACTS Derwent Publications Ltd., London, GB; week 9202, class J, AN 92014672; & SU - A - 1643029 (THERMOTCH RES INST)

## Beschreibung

Die Erfindung betrifft ein Verfahren zur Aufkonzentrierung von mit 1 bis 10 Gew.-% Salzen und Harzen beladenen Lösungen.

Bei der Herstellung von organischen Produkten fallen im Reaktionsraum oder in den folgenden Reinigungsprozessen vielfach Lösungsrückstände an, die mit 1 bis 10 Gew.-% Salzen und Harzen beladen sind. Diese Rückstände werden aufgearbeitet, um einerseits das Produkt oder das Lösungsmittel wieder zurückzugewinnen, andererseits den Abfall, der verbrannt werden muß, möglichst klein zu halten.

Produkte, welche häufig einer solchen Aufkonzentrierung unterzogen werden müssen, sind beispielsweise Chlorbenzol, Tolamin, Metamin, Orthamin, Alphamin, Kresol, Natriumbenzthiazol, Ciprofloxacin, Polyphenylensulfid, Natriummethylencaprolactam. Diisocyanate, Benzthiazyl-2-sulfinmorpholid-vulkazit und Benzthiazyl-2-dicyclohexylsulfonamid-vulkazit.

Als Verfahrensprinzip bietet sich der Eindampfprozeß an, da die wiederverwendbaren Produkte im allgemeinen einen wesentlich höheren Dampfdruck besitzen als die Abfälle. Für den Prozeßablauf ergeben sich jedoch dabei erhebliche Probleme, denn es müssen 90 bis 99 Gew.-% des Lösungsrückstandes abgedampft werden, die Sumpfphase wird zum Prozeßende hin viskos-pastös, das Salz fällt aus und führt zu harten Krusten an den beheizten Wänden und mit steigender Aufkonzentrierung steigt die Temperatur an, die Wärmeübertragung verschlechtert sich und es kann zur Nachpolymerisation kommen, was eine weitere Erhöhung der Viskosität bewirkt, Produktverlust bedeutet und zusätzlich die Anbackungsneigung verstärkt.

Allgemeiner Stand der Technik sind diskontinuierliche Verfahren im Rührkessel und in der Blase (VDI-Nachrichten 1983, S. 10) bzw. der Pfanne. In einigen Fällen werden auch den Behältern Umlaufverdampfer vorgeordnet, deren Aufkonzentrierungsgrad jedoch wegen des großen Umlaufs nur gering ist. Diese diskontinuierlichen Verfahren besitzen eine ganze Reihe von Nachteilen, denn eine diskontinuierliche Betriebsweise ist immer mit hohen Betriebskosten verbunden und umweltbelästigend. Die ganze Charge erreicht zum gleichen Zeitpunkt die zähflüssige Phase bei hohen Temperaturen. Zur Durchmischung des Systems müssen hohe Kräfte aufgebracht werden. Trotz der Durchmischung ist die Wärmeübertragung sehr schlecht, was eine lange Verweilzeit des Produkts in diesem Zustand bedeutet. Daher kommt es in diesen Apparaten oft zu Nachpolymerisationen, die zusammen mit dem ausgefallenen Salz zu starker Krustenbildung führen und vielfach einen bergmännischen Abbau der Krusten erfordern.

Schließlich handelt es sich um offene Destillationsprozesse, d.h. die Temperaturen liegen in der Endphase wesentlich höher als in einem geschlossenen Prozeß.

Wegen der vielen Nachteile im diskontinuierlichen Betrieb strebt man kontinuierliche Verfahren an. Kontinuierliche Verfahren bieten neben dem Kostenvorteil auch den Vorteil, daß sich immer nur ein kleiner Produktanteil gerade im kritischen Zustand der zähviskosen Phase befindet. Außerdem handelt es sich bei den kontinuierlich betriebenen Apparaturen um geschlossene Systeme, so daß die Produkttemperaturen immer tiefer liegen, als in den diskontinuierlich betriebenen Apparaten.

Ein kontinuierlich arbeitender Apparat, der verschiedentlich für solche Zwecke eingesetzt wird, ist der Dünnschichtverdampfer (Chemische Rundschau 1982, S. 19). Dabei wird die Lösung oben auf die Innenseite eines dicken Rohres aufgegeben und zentral angeordnete Wischer sorgen dafür, daß sich auf der Wand ein Film ausbildet. Die Lösung verdampft beim Durchlaufen des Apparates von oben nach unten. Der Dampf wird am oberen Ende, der Sumpf am unteren Ende des Rohres abgezogen. Die Wischer sorgen auch dafür, daß sich keine starken Krusten an den beheizten Rohrwänden bilden können. Der Dünnschichtverdampfer besitzt aber ebenfalls einige Nachteile, denn die Investitionskosten sind hoch, wegen der rotierenden Teile ist er störanfällig und auf den Wischerblättern setzen sich Produktspritzer ab und backen dort an, so daß der Apparat in bestimmten Zeitabständen gereinigt werden muß.

In der EP-A-0 011 183 ist ein spezielles Verfahren zur Isolierung von bohrhaltigen Phenol-Formaldehydreaktionsharzen beschrieben, bei dem eine günstige Reaktionsführung durch eine spezifische enge Verweilzeit bzw. Kontaktzeit der Lösung mit einem Wärmetauscher erreicht werden soll. Zur Eindampfung dient dabei ein gewendeltes Verdampfungsrohr. Die bei diesem Verfahren auftretenden Harze liegen in noch relativ hoher Konzentration vor und sind immer schmelzbar. Hinsichtlich der Aufarbeitung und Aufkonzentrierung von salz- und harzhaltigen Lösungen, die bei den hohen treibenden Temperaturgefällen zu Ablagerungen und Verkrustungen an Apparateteilen neigen, ergibt sich in EP-A-0 011 183 keine technische Lösung.

Es besteht die Aufgabe, die Verfahren hinsichtlich der Ausbeute, der Wirtschaftlichkeit und des ungestörten Ablaufes zu verbessern.

Die Aufgabe wird erfindungsgemäß gelöst durch ein kontinuierliches Verfahren zur Aufkonzentrierung von Lösungen in einem beheizten und im Durchlauf betriebenen Einrohrapparat, bei dem das Strömungsrohr zumindest im letzten Drittel stetig gekrümmt und im Durchmesser so dimensioniert ist, daß im Rohraustritt eine mittlere Strömungsgeschwindigkeit von zumindest 50 m/sec vorliegt, mindestens 90 Gew.-% der verdampfbaren Komponenten bei treibenden Temperaturgefällen zwischen Heizmittel und Lösung von 20 bis 200° C abgedampft werden, wobei mit 1 bis 10 Gew.-% Salzen und Harzen beladene Lösungen eingesetzt werden.

Vorzugsweise soll am Rohraustritt Schallgeschwindigkeit vorliegen.

Es ist erstaunlich, daß in einem im Durchlauf betriebenen Strömungsrohr der Trennprozeß so weit geführt werden kann. Nach dem Strömungsschaubild von D. Baker (Oil Gas Journal 53 (1954) 12; Seiten 185 bis 195) ist nämlich anzunehmen, daß bei diesen hohen Strömungsgeschwindigkeiten und den hohen Dampfanteilen sich im letzten Teil des Rohres eine Dispersionsströmung ausbildet, wobei die Flüssigphase in Form von Tröfchen im Gasstrom verteilt ist. In diesem Falle würde die Wand vom Dampf benetzt und damit wärmeisoliert sein, die Tröpfchen würden mit der hohen Geschwindigkeit diesen Teil durchströmen und im folgenden Abschneider zum größten Teil vom Brüdenstrom mitgerissen werden. Die Dispersionsströmung wird jedoch überraschenderweise durch die stetige Krümmung des Rohres verhindert. Flüssigkeit, die in den Gasstrom mitgerissen wird, wird infolge der Zentrifugal- und Oberflächenkräfte schnell wieder an der Rohrwand abgeschieden, so daß immer ein zusammenhängender Flüssigkeitsstrom und zumindest eine Teilbenetzung der beheizten Wand erhalten bleibt.

Weiter ist erstaunlich, daß sich im allgemeinen keine dauernden Krusten an den Wänden bilden. Bei den hohen treibenden Temperaturgefällen neigen nämlich die Salze, verbunden mit den Harzen zu starker Krustenbildung, insbesondere, wenn noch eine Nachpolymerisation stattfindet. Diese Krustenbildung wird zunächst durch die großen Strömungsgeschwindigkeiten und die dadurch erzeugten hohen Scherkräfte an der Wand weitgehend verhindert.

Bilden sich trotzdem kurzzeitig Anbackungen, so baut sich in dem im Durchlauf betriebenen Einrohrapparat vor der verengten Stelle ein Staudruck auf und in dem verengten Strömungsquerschnitt steigt der Strömungswiderstand an. Damit verbunden ist eine Erhöhung der Wandscherkräfte, die so lange ansteigen, bis sie größer sind als die Haftkräfte, was zur Lösung der Krusten von der Wand führt.

In einigen extremen Fällen können die Scherkräfte die Haftkräfte nicht überwinden. In diesem Falle besteht jedoch die Möglichkeit, die Lösung zunächst bis zu einer dünnflüssigen Suspension einzudampfen, das Salz abzufiltrieren und den restlichen Sumpf dann weiter aufzukonzentrieren.

Dabei wird in der ersten Stufe zunächst vorteilhafterweise 50 bis 70 Gew.-% der Lösung verdampft. Ein Teil der Salze fällt hierbei aus, die dann durch eine Filtration aus dem Sumpf entfernt werden können. In der zweiten Stufe wird dazu der Sumpf auf die geforderte Endkonzentration eingedickt.

Eine andere bzw. zusätzliche Möglichkeit besteht darin, bei weiterlaufender Beheizung in den Einrohrapparat intervallweise und kurzzeitig ein Spülmittel einzuführen und darin zumindest zum größten Teil zu verdampfen.

Dazu ist am Rohreintritt eine Spülleitung angeordnet. Bilden sich im Strömungsrohr Krusten aus, was sich in einer Absenkung der übertragenen Wärmemenge und in einem Druckaufbau im Rohr bemerkbar macht, so wird kurzzeitig für 30 bis 60 Sekunden auf die Spülleitung umgeschaltet. Das Spülmittel durchströmt für diese Zeit das Strömungsrohr und löst die Kruste auf. Zugleich verdampft es weitgehend, da die Rohrheizung während der Spülzeit nicht abgestellt wird.

Vorteilhaft ist es auch, durch das Einstellen des Druckes in einem dem Strömungsrohr nachgeordneten Abscheider auf einen Wert unterhalb des zur Schallgeschwindigkeit gehörenden kritischen Druckes im Rohraustritt eine zusätzliche Expansionsverdampfung zu verursachen.

Die Expansionsverdampfung findet dabei im Rohrausschnitt in den Abscheider hinein statt, was zu einem erhöhten Aufkonzentrierungsgrad führt. Das erfindungsgemäße Verfahren zeichnet sich durch geringe Betriebskosten und wenig Umweltbelästigung aus. Als kontinuierliches Verfahren mit geschlossener Destillation benötigt es nur mäßige Kräfte und niedrigere Temperaturen als ein diskontinuierliches Verfahren. Die Wärmeübertragung ist wegen der hohen Strömungsgeschwindigkeiten und der großen treibenden Temperaturgefälle gut. Die Verweilzeit ist klein, was besonders wichtig ist, wenn Nachpolymerisation zu erwarten ist. Die Gefahr der Krustenbildung ist wesentlich verringert. Die Reinigungszyklen werden deutlich größer und sind schneller durchgeführt. Es besteht auch nicht mehr die Gefahr des Aufbaus von Krustenbergen, die dann nur noch bergmännisch abzubauen sind. Gegenüber dem kontinuierlichen Alternativverfahren im Dünnschichtverdampfer ist das neue Verfahren kostengünstiger und weniger störanfällig, da keine rotierenden Teile vorhanden sind und ein Selbstreinigungseffekt stattfindet.

### Beispiel 1

| Ausgangslösung: | | |
|---|---|---|
| Piperazin | 30 kg/h | 10 Gew.-% |
| Wasser | 252 kg/h | 84 Gew.-% |
| Abfall (Salze und Harze) | 18 kg/h | 6 Gew.-% |

| Sumpfablauf: | |
|---|---|
| Piperazin | 1 kg/h |
| Wasser | 2 kg/h |
| Abfall | 18 kg/h |

| Destillatablauf: | |
|---|---|
| Piperazin | 29 kg/h |
| Wasser | 250 kg/h |

| Rohrgeometrie: gewendeltes Doppelmantelrohr | |
|---|---|
| Rohrinnendurchmesser | 29,7 mm |
| Wandstärke | 2 mm |
| Rohrlänge | 18 m |
| Wendeldurchmesser | 1000 mm |
| Wärmeaustauschfläche | 1,7 m² |

| Zustandsbedingungen am Rohraustritt: | |
|---|---|
| Druck | 1 bar |
| Temperatur | 134°C |
| Strömungsgeschwindigkeit | 150 m/sec |
| Dampfanteil | 93 Gew.-% |

| Heizmittel: | |
|---|---|
| 16 bar Wasserdampf | 195°C |

alle 30 Minuten ein Spülstoß über 30 Sekunden.

### Beispiel 2 mit Zwischenfiltration

| | |
|---|---|
| Durchsatz: | 1000 kg/h |

| Zusammensetzung am Einlauf: | |
|---|---|
| Isopropanol | 67 Gew.-% |
| Wasser | 16,5 Gew.-% |
| Natriummethylencaprolactam | 14 Gew.-% |
| Salze | 2 Gew.-% |
| Harze | 0,5 Gew.-% |

### 1. Stufe:

| Rohrgeometrie: | gewendeltes Doppelmantelrohr |
|---|---|
| Innendurchmesser: | 60,3 mm |
| Wandstärke: | 2 mm |
| Länge: | 30 m |
| Wendeldurchmesser: | 1200 mm |
| Wärmeaustauschfläche: | 5,68 m² |

### Zustandsbedingungen am Rohraustritt

| | |
|---|---|
| Druck: | 1 bar |
| Temperatur: | 120°C |
| Strömungsgeschwindigkeit: | 100 m/s |
| Dampfanteil: | 80 Gew.-% |
| Heizmittel: | 4 bar |
| Wasserdampf: | 145°C |

| Sumpfzusammensetzung: | |
|---|---|
| Isopropanol | 21,6 Gew.-% |
| Wasser | 4,2 Gew.-% |
| Natriummethylencaprolactam | 64,6 Gew.-% |
| Hochsieder (Salze und Harze) | 9,6 Gew.-% |

### 2. Stufe:

| Rohrgeometrie: | gewendeltes Doppelmantelrohr |
|---|---|
| Innendurchmesser: | 33,7 mm |
| Wandstärke: | 2 mm |
| Länge: | 20 m |
| Wendeldurchmesser: | 600 mm |
| Wärmeaustauschfläche: | 2,12 m² |
| Wendelneigung: | 15° |

### Zustandsbedingungen am Rohraustritt

| | |
|---|---|
| Druck: | 500 mbar |
| Temperatur: | 200°C |
| Dampfanteil: | 97 Gew.-% |
| Heizmittel: | 30 bar |
| Wasserdampf: | 235°C |

### Zusammensetzung am Einlauf und am Sumpf

| | | |
|---|---|---|
| Isopropanol | 23,7 Gew.-% | 0,3 Gew.-% |
| Wasser | 4,6 Gew.-% | 0,06 Gew.-% |
| Natriummethylencaprolactam | 70,4 Gew.-% | 33,4 Gew.-% |
| Hochsieder (Salze und Harze) | 1,3 Gew.-% | 66,3 Gew.-% |

## Patentansprüche

1. Kontinuierliches Verfahren zur Aufkonzentrierung von Lösungen in einem beheizten und im Durchlauf betriebenen Einrohrapparat, bei dem das Strömungsrohr zumindestens im letzten Drittel stetig gekrümmt und im Durchmesser so dimensioniert ist, daß im Rohraustritt eine mittlere Strömungsgeschwindigkeit von zumindest 50 m/sec vorliegt, mindestens 90 Gew.-% der verdampfbaren Komponenten bei treibenden Temperaturgefällen zwischen Heizmittel und Lösung von 20 bis 200° C abgedampft werden, dadurch gekennzeichnet, daß mit 1 bis 10 Gew.-% Salzen und Harzen beladene Lösungen eingesetzt werden.

2. Verfahren nach Anspruch 1, dadurch gekennzeichnet, daß am Rohraustritt Schallgeschwindigkeit eingestellt wird.

3. Verfahren nach Anspruch 1 oder 2, dadurch gekennzeichnet, daß die Lösung zunächst bis zu einer dünnflüssigen Suspension eingedampft, das Salz abfiltriert und der restliche Sumpf dann weiter aufkonzentriert wird.

4. Verfahren nach Anspruch 1, 2 oder 3, dadurch gekennzeichnet, daß in den Einrohrapparat bei weiterlaufender Beheizung intervallweise und kurzzeitig Spülmittel eingeführt und darin zumindest zum größten Teil verdampft wird.

5. Verfahren nach einem der Ansprüche 1 bis 4, dadurch gekennzeichnet, daß durch Einstellen des Druckes in einem dem Einrohrapparat nachgeordneten Abscheider auf einen Wert unterhalb des zur Schallgeschwindigkeit gehörenden kritischen Druckes im Rohraustritt eine zusätzliche Expansionsverdampfung verursacht wird.

## Claims

1. A continuous process for the concentration of solutions in a heated and continuously run single-tube apparatus, in which the flow tube at least in the last one-third is continuously curved and so dimensioned in diameter that at the tube exit a mean flow rate of at least 50 m/sec exists and at least 90 wt.% of the vaporizable components are vaporized in the case of driving temperature differentials between heating medium and solution of 20 to 200 °C, characterized in that solutions charged with 1 to 10 wt.% salts and resins are fed.

2. A process according to Claim 1, characterized in that sonic velocity is set up in the tube exit.

3. A process according to Claim 1 or 2, characterized in that the solution is first evaporated down to a thin suspension, the salt filtered off and the remaining liquid phase then concentrated further.

4. A process according to Claim 1, 2 or 3, characterized in that rinsing agent is introduced at intervals and briefly into the single-tube apparatus with continued heating and at least for the most part evaporated therein.

5. A process according to one of Claims 1 to 4, characterized in that by adjustment of the pressure in a separator inserted after the single-tube apparatus to a value below the critical pressure required for sonic velocity in the tube exit an additional expansion vaporization is caused.

## Revendications

1. Procédé continu pour concentrer des solutions dans un appareil monotubulaire chauffé et opérant en circulation, dans lequel le conduit d'écoulement, au moins dans le dernier tiers, présente une courbure constante et a un diamètre tel que la vitesse moyenne d'écoulement a la sortie du conduit est d'au moins 50 m/s, au moins 90% en poids des composants vaporisables étant évaporés à des différences de température opératoires de 20 à 200°C entre le fluide chauffant et la solution, caractérisé en ce que l'on met en oeuvre des solutions chargées de 1 à 10% en poids de sels et de résines.

2. Procédé selon la revendication 1, caractérisé en ce que l'on règle à la vitesse du son à la sortie du conduit.

3. Procédé selon la revendication 1 ou 2, caractérisé en ce que l'on évapore d'abord la solution jusqu'à l'état de suspension fluide, on filtre le sel et on poursuit la concentration du filtrat.

4. Procédé selon les revendications 1, 2 ou 3, caractérisé en ce que, dans l'appareil monotubulaire toujours chauffé, on introduit à certains intervalles et pendant un court moment un produit de rinçage qui y est vaporisé, au moins pour la plus grande part.

5. Procédé selon une des revendications 1 à 4, caractérisé en ce que l'on provoque à la sortie du conduit une vaporisation supplémentaire par expansion en réglant la pression, dans un séparateur disposé après l'appareil monotubulaire, à une valeur inférieure à la pression critique correspondant à la vitesse du son.
